# NEUE EUROPÄISCHE PATENTSCHRIFT

(11) **EP 1 259 743 B2**
(45) Veröffentlichungstag und Bekanntmachung des Hinweises auf die Entscheidung über den Einspruch: **26.03.2008**
(45) Hinweis auf die Patenterteilung: 19.01.2005
(21) Anmeldenummer: 01988829.6
(22) Anmeldetag: 09.10.2001
(51) Int. Cl.: F16F 9/04

(54) **LUFTFEDERANORDNUNG**
AIR SPRING ARRANGEMENT
ENSEMBLE SUSPENSION PNEUMATIQUE

(30) Priorität: 24.10.2000 DE 10052815
(43) Veröffentlichungstag der Anmeldung: 27.11.2002
(73) Patentinhaber: Vibracoustic GmbH & Co. KG, 69469 Weinheim (DE)
(72) Erfinder: BRANCO, Antonio, 21073 Hamburg (DE); LORENZ, Rüdiger, 21335 Lüneburg (DE); SCHLITTCHEN, Jens, 08058 Zwickau (DE)
(74) Vertreter: Mattausch, Klaus
(86) Internationale Anmeldenummer: PCT/DE2001/003852
(87) Internationale Veröffentlichungsnummer: WO 2002/035112

(56) Entgegenhaltungen:
- EP-A- 0 442 093
- EP-A- 0 939 241
- DE-A- 4 006 480
- DE-U- 29 706 640
- FR-A- 2 356 028
- US-A- 4 946 144
- US-A- 5 921 532

## Beschreibung

Die Erfindung betrifft eine Luftfederanordnung, gemäß Oberbegriff des Anspruchs 1.

Die gattungsgemäße Luftfederanordnung (Kurzform "Luftfeder") findet im Fahrzeugbau (PKW, Nutz- und Schienenfahrzeuge) eine breite Anwendung. Zusätzliche Bauteile können Stoßdämpfer mit Dämpferlager, Außenführung für den Luftfederbalg und/oder Schutzmanschette sein.

In der Offenlegungsschrift 36 43 073 A1 wird ein Anschlussbereich für die beiden Balgenden des Luftfederbalges beschrieben, bei dem sowohl der Deckel als auch der Abrollkolben mit einem Klemmsitz ausgestattet ist. Der Klemmsitz kann dabei glatt oder mit Rillen versehen sein. Die Verklemmung jedes Balgendes erfolgt dabei mittels eines Befestigungsringes. Üblicherweise wird dieser Ring plastisch verformt, so dass eine formschlüssige Verbindung mit dem Klemmsitz des Deckels bzw. Abrollkolbens entsteht. Gegebenenfalls kann das Balgende noch mit einem Elastomerstreifen aufgedickt sein (EP 0 929 759 B1) oder eine Umschlingung erfahren (US 4 946 144).

Im nächstliegenden Stand der Technik, der Offenlegungsschrift EP 0 939 241 A1 wird eine Luftfeder vorgestellt, bei der wenigstens einer der Anschlussbereiche, insbesondere der des Deckels, konusförmig gestaltet ist, und zwar unter Bildung korrespondierender Konusflächen von Klemmsitz und Befestigungsring. Das untere Ende des Klemmsitzes weist einen nach außen verlaufenden Vorsprung auf, der den Luftfederbalg unterhalb des Befestigungsringes in eine radial nach außen verlaufende Erstreckungsrichtung zwingt und somit als Lagesicherung dient. Wie schon oben beschrieben wird auch hier der Ring bei der Montage plastisch verformt, so dass das entsprechende Balgende wie auch der korrespondierende Klemmsitz einschließlich der Lagesicherung druckbeaufschlag wird.

Mit der oben beschriebenen Verklemmungstechnologie wird eine wirksame Abdichtung des Luftfederbalges erzielt. Nachteilig ist jedoch die Verschleißanfälligkeit des Balgendes. Darüber hinaus beinhaltet die formschlüssige Verbindung einen aufwendigen Verfahrensprozess.

Im Rahmen einer Weiterentwicklung besteht die Aufgabe der Erfindung darin, eine Luftfederanordnung bereitzustellen, bei der innerhalb des Anschlussbereiches des Luftfederbalges anstelle der formschlüssigen Verbindung eine kraft- bzw. reibschlüssige Verbindung durch Keilwirkung erzielt wird.

Gelöst wird diese Aufgabe gemäß Kennzeichen des Patentanspruches 1.

Zweckmäßige Ausgestaltungen der erfindungsgemäßen Luftfederanordnung sind in den Patentansprüchen 2 bis 8 genannt.

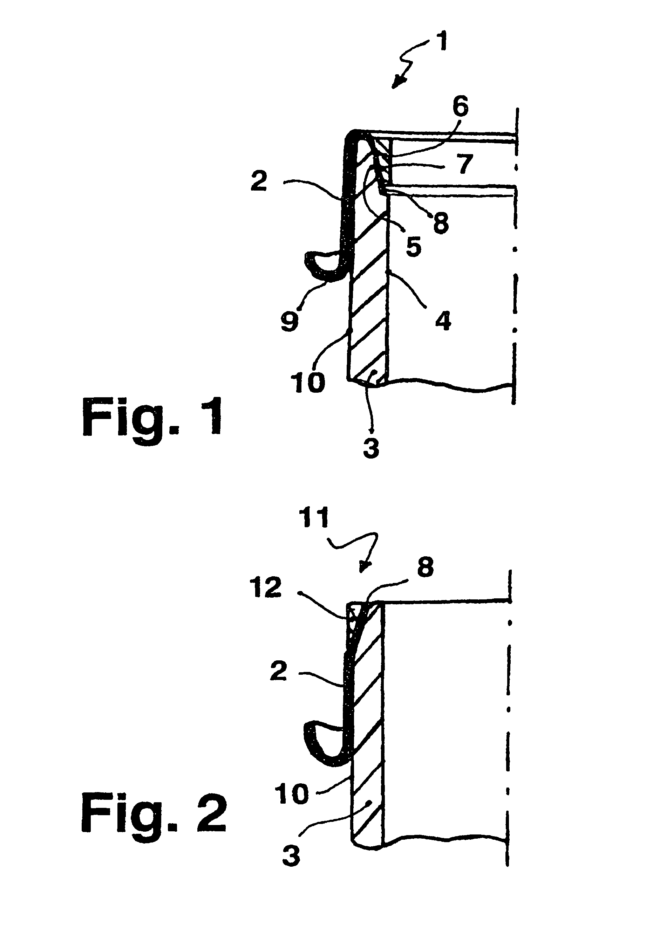

Die Erfindung wird nun anhand von Beispielen unter Bezugnahme auf schematische Zeichnungen erläutert, wobei Figuren 1 und 2 Beispiele betreffen, die das Verständnis der Erfindung erleichtern. Es zeigen:
- Fig. 1: einen konusförmigen Anschlussbereich an der Innenseite des Abrollkolbens;
- Fig. 2: einen konusförmigen Anschlussbereich an der Außenseite des Abrollkolbens;
- Fig. 3: einen konusförmigen Anschlussbereich mit einer Lagesicherung in Form eines Stützringes;
- Fig. 4: einen konusförmigen Anschlussbereich mit einer Lagesicherung in Form einer Clipverbindung bei zusätzlicher Umschlingung des Befestigungsringes;
- Fig. 5: einen konusförmigen Anschlussbereich mit einer Lagesicherung in Form einer Stützkante bei zusätzlicher Umschlingung des Befestigungsringes.

Nach Fig. 1 ist der Anschlussbereich **1** an der Innenseite **4** des Abrollkolbens **3** angeordnet. Der Anschlussbereich ist konusförmig gestaltet, und zwar unter Bildung korrespondierender Konusflächen von Klemmsitz **5** und Befestigungsring **6.** Zwischen dem Klemmsitz des Abrollkolbens und der verklemmenden Wirkfläche **7** des Befestigungsringes befindet sich das Balgende **8** des Luftfederbalges **2.** Bei Druckbeaufschlagung werden die beiden Konusflächen infolge des auf die Wirkfläche des Befestigungsringes lastenden Druckes gegeneinander gedrückt, wobei eine kraftschlüssige Verbindung unter abdichtender Verklemmung des Balgendes entsteht (selbsttätige Verklemmung).

In Abhängigkeit vom Druck kann bei diesem Anschlusskonzept die Verklemmung beeinflusst werden. Durch die Variation der Wirkfläche **7** des Befestigungsringes **6** kann die Verklemmkraft ebenfalls beeinflusst werden.

Die Schlaufe **9** des Luftfederbalges **2** kann im Rahmen der Ein- und Ausfederung an der freien Außenseite des Abrollkolbens entlang gleiten.

Fig. 2 zeigt einen Anschlussbereich **11**, der an der Außenseite **10** des Abrollkolbens **3** angeordnet ist. Hinsichtlich der Verklemmung des Balgendes **8** mittels des Befestigungsringes **12** wird auf das in Verbindung mit der Fig. 1 beschriebene Wirkprinzip verwiesen.

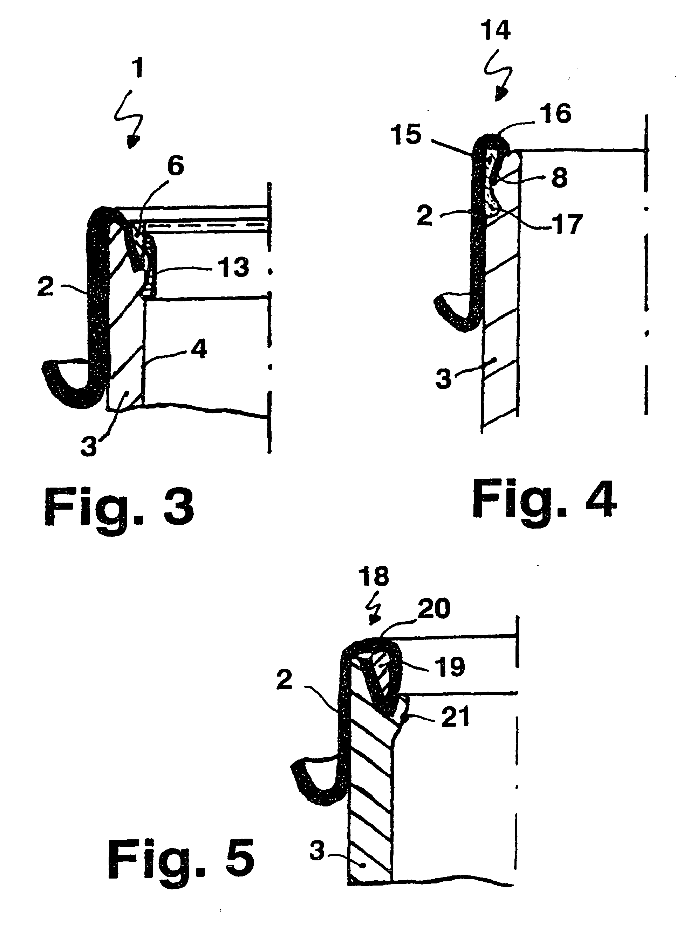

Während die Fig. 1 und 2 ausschließlich auf die Konizität des Anschlussbereiches und das Wirkprinzip im druckbeaufschlagten Zustand eingehen, werden nun in Verbindung mit den Fig. 3 bis 5 drei Varianten der Lagesicherung vorgestellt.

Fig. 3 zeigt nun den gleichen Anschlussbereich 1, wie er bei der Fig. 1 dargestellt ist. Die Lagesicherung **13** ist hier ein Stützring, der in Kontakt steht mit der Innenseite **4** des Abrollkolbens **3** einerseits und dem Befestigungsring **6** andererseits. Die Lagesicherung ist von Bedeutung, wenn der Luftfederbalg **2** nicht druckbeaufschlagt wird.

Fig. 4 zeigt einen Anschlussbereich **14,** wo das Balgende **8** im Bereich der Wirkfläche des Befestigungsringes **15** endet, wobei im Gegensatz zu den Beispielen gemäß Fig. 1 bis 3 jedoch eine Umschlingung **16** des Befestigungsringes durch den Luftfederbalg **2** erfolgt. Bei Druckbeaufschlagung wird dann die Konusfläche des Befestigungsringes **15** auf die Konusfläche des Abrollkolbens **3** gezogen, wodurch eine kraftschlüssige Verbindung zwischen den Teilen entsteht. Die Lagesicherung **17** im drucklosen Zustand des Luftfederbalges ist hier eine Clipverbindung als integriertes Teil des Befestigungsringes **15,** die im Abrollkolben **3** einrastet.

Eine Clipverbindung als Lagesicherung kann beispielsweise auch bei dem Beispiel gemäß Fig. 2 verwendet werden, indem der obere Teil des Befestigungsringes **12** in den Kopfteil des Abrollkolbens **3** einrastet.

Fig. 5 zeigt ein weiteres Beispiel eines Anschlussbereiches **18,** bei dem eine Umschlingung **20** des Befestigungsringes **19** durch den Luftfederbalg **2** erfolgt. Das Wirkprinzip der kraftschlüssigen Verbindung ist wie bei dem Beispiel gemäß Fig. 4. Die Lagesicherung **21** im drucklosen Zustand wird hier durch eine Stützkante gebildet, die einstückig mit dem Abrollkolben **3** verbunden ist. Die Stützkante sorgt zudem dafür, dass keine Verdrehung des Befestigungsringes **19** stattfindet. Auf diese Weise wird eine ungleichmäßige Verklemmung verhindert.

Eine Stützkante als Lagesicherung kann beispielsweise auch bei dem Beispiel gemäß Fig. 2 verwendet werden, indem der Kopfteil des Abrollkolbens 3 mit einer entsprechenden Stützkante ausgestattet wird.

Das in den Fig. 1 bis 5 beschriebene Konzept ist auch auf den Anschlussbereich des Deckels anwendbar, wobei der Deckel als Kopfplatte oder topfförmig in Form eines Druckbehälters ausgebildet sein kann, und zwar mit oder ohne Schlaufenbildung des Luftfederbalges. Hinsichtlich beispielhafter Deckelkonstruktionen wird auf die Druckschriften DE 198 42 733 A1, DE 100 01 018 A1 und DE 101 03 493 A1 verwiesen.

Diese neuartige Verklemmungstechnologie ist innerhalb der gattungsgemäßen Luftfederanordnung selbstverständlich auch auf beide Anschlussbereiche anwendbar.

### Bezugszeichenliste

- **1**: Anschlussbereich
- **2**: Luftfederbalg
- **3**: Abrollkolben (Tauchkolben)
- **4**: Innenseite des Abrollkolbens
- **5**: Klemmsitz
- **6**: Befestigungsring
- **7**: Wirkfläche des Befestigungsringes
- **8**: Balgende
- **9**: Schlaufe (Rollfalte)
- **10**: Außenseite des Abrollkolbens
- **11**: Anschlussbereich
- **12**: Befestigungsring
- **13**: Lagesicherung in Form eines Stützringes
- **14**: Anschlussbereich
- **15**: Befestigungsring
- **16**: Umschlingung des Befestigungsringes
- **17**: Lagesicherung in Form einer Clipverbindung
- **18**: Anschlussbereich
- **19**: Befestigungsring
- **20**: Umschlingung des Befestigungsringes
- **21**: Lagesicherung in Form eines Stützkante

## Patentansprüche

1. Luftfederanordnung, bestehend wenigstens aus:
einem Luftfederbalg (2) aus elastomerem Werkstoff mit zwei Balgenden (8), der insbesondere mit einem eingebetteten Festigkeitsträger versehen ist; sowie
einen Deckel und Abrollkolben (3), die je einen Anschlussbereich (1, 11, 14, 18) für das jeweilige Balgende (8) aufweisen, wobei der Luftfederbalg (2) an beiden Balgenden am Deckel einerseits und am Abrollkolben andererseits befestigt ist, wobei wiederum wenigstens einer der Anschlussbereiche mit einem Klemmsitz (5) und einem Befestigungsring (6, 12, 15, 19), der eine verklemmende Wirkfläche (7) besitzt, ausgestattet ist, wobei wiederum wenigstens einer der Anschlussbereiche konusförmig gestaltet ist, und zwar unter Bildung korrespondierender Konusflächen von Klemmsitz und Befestigungsring, wobei ferner der konusförmige Anschlussbereich mit einer Lagesicherung (13,17,21) für den Befestigungsring (6, 12, 15, 19) versehen ist;
**dadurch gekennzeichnet, dass**
bei Druckbeaufschlagung des Luftfederbalges (2) die Konusfläche des Befestigungsrings (6, 12, 15, 19) gegen die korrespondierende Konusfläche des Klemmsitzes (5) am Deckel und/oder Abrollkolben (3) gedrückt wird, wobei eine kraftschlüssige Verklemmung des Balgendes (8) entsteht; und
die Lagesicherung (13,17,21) den Befestigungsring (6, 12, 15, 19) am konusförmigen Anschlussbereich (1, 11, 14, 18) am Deckel und/oder Abrollkolben (3) sichert, wenn der Luftfederbalg (2) nicht druckbeaufschlagt ist.

2. Luftfederanordnung nach Anspruch 1, **dadurch gekennzeichnet, dass** der Anschlussbereich (1, 18) an der Innenseite (4) des Deckels und/oder Abrollkolbens (3) angeordnet ist.

3. Luftfederanordnung nach Anspruch 1, **dadurch gekennzeichnet, dass** der Anschlussbereich (11, 14) an der Außenseite (10) des Deckels und/oder Abrollkolbens (3) angeordnet ist.

4. Luftfederanordnung nach einem der Ansprüche 1 bis 3, insbesondere nach Anspruch 2 oder 3, **dadurch gekennzeichnet, dass** das Balgende (8) im Bereich der Wirkfläche (7) des Befestigungsringes (6, 12) endet, ohne den Befestigungsring zu umschlingen.

5. Luftfederanordnung nach einem der Ansprüche 1 bis 3, insbesondere nach Anspruch 2 oder 3, **dadurch gekennzeichnet, dass** das Balgende (8) im Bereich der Wirkfläche (7) des Befestigungsringes (15, 19) endet, wobei eine Umschlingung (16, 20) des Befestigungsringes durch den Luftfederbalg (2) erfolgt.

6. Luftfederanordnung nach einem der Ansprüche 1 bis 5, **dadurch gekennzeichnet, dass** die Lagesicherung (13) ein Stützring ist.

7. Luftfederanordnung nach einem der Ansprüche 1 bis 5, **dadurch gekennzeichnet, dass** die Lagesicherung (21) eine Stützkante ist, die einstückig mit dem Deckel bzw. Abrollkolben (3) verbunden ist.

8. Luftfederanordnung nach einem der Ansprüche 1 bis 5, **dadurch gekennzeichnet, dass** die Lagesicherung (17) eine Clipverbindung als integriertes Teil des Befestigungsringes (15) ist, die im Deckel bzw. Abrollkolben (3) einrastet.

## Claims

1. Air spring arrangement, comprising at least:
one air spring bellows (2) of elastomeric material with two bellows ends (8), the bellows being provided, in particular, with an embedded strengthening support; and
one cover and rolling piston (3), each having a connecting region (1, 11, 14, 18) for the particular bellows end (8), the air spring bellows (2) being fastened at both bellows ends to the cover on the one hand and to the rolling piston on the other hand, at least one of the connecting regions in turn being equipped with a clamping seat (5) and a fastening ring (6, 12, 15, 19), which has an active clamping surface (7), and at least one of the connecting regions being in turn of conical design, specifically with corresponding cone surfaces of the clamping seat and fastening ring being formed, the conical connecting region being furthermore provided with a position-securing means (13, 17, 21) for the fastening ring (6, 12, 15, 19);
**characterized in that**
when the air spring bellows (2) is pressurized, the cone surface of the fastening ring (6, 12, 15, 19) is pressed against the corresponding cone surface of the clamping seat (5) on the cover and/or rolling piston (3), a frictional clamping of the bellows end (8) arising; and
the position-securing means (13, 17, 21) secures the fastening ring (6, 12, 15, 19) to the conical connecting region (1, 11, 14, 18) on the cover and/or rolling piston (3) if the air spring bellows (2) is not pressurized.

2. An air spring arrangement according to claim 1, **characterized in that** the connecting region (1, 18) is arranged on the inside (4) of the cover and/or rolling piston (3).

3. An air spring arrangement according to claim 1, **characterized in that** the connecting region (11, 14) is arranged on the outside (10) of the cover and/or rolling piston (3).

4. An air spring arrangement according to any one of claims 1 to 3, in particular according to claim 2 or 3, **characterized in that** the bellows end (8) ends in the region of the active surface (7) of the fastening ring (6, 12) without twisting around the fastening ring.

5. An air spring arrangement according to any one of claims 1 to 3, in particular according to claim 2 or 3, **characterized in that** the bellows end (8) ends in the region of the active surface (7) of the fastening ring (15, 19), with the air spring bellows (2) twisting (16, 20) around the fastening ring.

6. An air spring arrangement according to any one of claims 1 to 5, **characterized in that** the position-securing means (13) is a supporting ring.

7. An air spring arrangement according to any one of claims 1 to 5, **characterized in that** the position-securing means (21) is a supporting edge which is connected integrally to the cover or rolling piston (3).

8. An air spring arrangement according to any one of claims 1 to 5, **characterized in that** the position-securing means (17) is a clip connection as an integrated part of the fastening ring (15), the clip connection snapping into place in the cover or rolling piston (3).

## Revendications

1. Ensemble de suspension pneumatique, constitué au moins :
- d'un soufflet de suspension pneumatique (2) en matériau élastomère avec deux extrémités de soufflet (8), qui est notamment pourvu d'un support de résistance incorporé ; et
- d'un élément de recouvrement et d'un piston de roulement (3) qui présentent chacun une région de raccordement (1, 11, 14, 18) pour l'extrémité respective de soufflet (8), le soufflet de suspension pneumatique (2) étant fixé, aux deux extrémités de soufflet, d'une part sur l'élément de recouvrement et d'autre part sur le piston de roulement, au moins une des régions de raccordement étant dotée d'un ajustement serré (5) et d'une bague de fixation (6, 12, 15, 19) qui possède une surface active de serrage (7), au moins une des régions de raccordement étant réalisée conique, et ce en formant des surfaces coniques correspondantes de l'ajustement serré et de la bague de fixation, et la région de raccordement conique étant en outre pourvue d'un assujettissement en position (13, 17, 21) pour la bague de fixation (6, 12, 15, 19) ;
**caractérisé en ce que**
- lorsque le soufflet de suspension pneumatique (2) est sollicité en pression, la surface conique de la bague de fixation (6, 12, 15, 19) est pressée contre la surface conique correspondante de l'ajustement serré (5) sur l'élément de recouvrement et/ou le piston de roulement (3), un serrage à force de l'extrémité de soufflet (8) étant obtenu; et
- l'assujettissement en position (13, 17, 21) assujettit la bague de fixation (6, 12, 15, 19) sur la région de raccordement conique (1, 11, 14, 18) sur l'élément de recouvrement et/ou le piston de roulement (3) lorsque le soufflet de suspension pneumatique (2) n'est pas sollicité en pression.

2. Ensemble de suspension pneumatique selon la revendication 1, **caractérisé en ce que** la région de raccordement (1, 18) est disposé sur le côté intérieur (4) de l'élément de recouvrement et/ou du piston de roulement (3).

3. Ensemble de suspension pneumatique selon la revendication 1, **caractérisé en ce que** la région de raccordement (11, 14) est disposé sur le côté extérieur (10) de l'élément de recouvrement et/ou du piston de roulement (3).

4. Ensemble de suspension pneumatique selon l'une des revendications 1 à 3, notamment selon la revendication 2 ou 3, **caractérisé en ce que** l'extrémité de soufflet (8) se termine dans la région de la surface active (7) de la bague de fixation (6, 12), sans embrasser la bague de fixation.

5. Ensemble de suspension pneumatique selon l'une des revendications 1 à 3, notamment selon la revendication 2 ou 3, **caractérisé en ce que** l'extrémité de soufflet (8) se termine dans la région de la surface active (7) de la bague de fixation (15, 19), le soufflet de suspension pneumatique (2) embrassant (16, 20) la bague de fixation.

6. Ensemble de suspension pneumatique selon l'une des revendications 1 à 5, **caractérisé en ce que** l'assujettissement en position (13) est une bague d'appui.

7. Ensemble de suspension pneumatique selon l'une des revendications 1 à 5, **caractérisé en ce que** l'assujettissement en position (21) est une arête d'appui, qui est solidairement reliée à l'élément de recouvrement ou respectivement au piston de roulement (3).

8. Ensemble de suspension pneumatique selon l'une des revendications 1 à 5, **caractérisé en ce que** l'assujettissement en position (17) est un clipsage en tant qu'élément intégré de la bague de fixation (15), qui s'enclenche dans l'élément de recouvrement ou respectivement dans le piston de roulement (3).
